Europäisches Patentamt

European Patent Office

Office européen des brevets

(11) Veröffentlichungsnummer: **0 227 897**
A1

# (12) EUROPÄISCHE PATENTANMELDUNG

(21) Anmeldenummer: 86113555.6

(22) Anmeldetag: 02.10.86

(51) Int. Cl.⁴: **B 29 C 67/16**, B 29 C 67/20,
E 04 B 1/68, F 16 M 5/00,
F 16 M 7/00
//
(B29K105/04, 105:16)

(30) Priorität: 20.12.85 DE 3545521

(43) Veröffentlichungstag der Anmeldung: 08.07.87
Patentblatt 87/28

(84) Benannte Vertragsstaaten: AT CH DE ES FR GB LI

(71) Anmelder: IPA-BAUCHEMIE GMBH, Riedhof 5,
D-8195 Egling 1 (DE)

(72) Erfinder: Letsch, Reiner, Dr. Dipl.-Ing., Eichenstrasse 10,
D-8121 Pähl (DE)

(74) Vertreter: Müller, Hans-Jürgen, Dipl.-Ing. et al, Müller,
Schupfner & Gauger
Lucile-Grahn-Strasse 38 Postfach 80 13 69,
D-8000 München 80 (DE)

(54) **Verformbarer Formkörper sowie Verwendung desselben, Verfahren zu dessen Herstellung und Reaktionsharzkomponente für dieses Verfahren.**

(57) Bei einem elastisch oder plastisch verformbaren Formkörper (10), der auch erst am Ort seiner Verwendung beispielsweise zum Ausfüllen von Fugen (20) und Rissen seine Formgestalt erhalten kann, werden die in eine Kunststoffmasse (1) eingebetteten Hohlräume (2) dadurch erzeugt, daß die Hohlräume von häutchenartigen Hüllkörpern (3) gebildet werden, welche insbesondere als kleine Mikrohohlkugeln in die Kunststoffmasse (1) vor deren Aushärtung eingebracht werden. Für die Kunststoffmasse (1) eignen sich vor allem Reaktionspartner, die durch chemische Reaktion miteinander reagieren und nach dem Aushärten die Kunststoffmasse (1) bilden.

# B E S C H R E I B U N G
=========================

Die Erfindung bezieht sich auf einen verformbaren Formkörper der im Oberbegriff des Patentanspruchs 1 genannten Gattung sowie auf eine Reaktionsharzkomponente zu dessen Herstellung.

Derartige im Volumen elastisch oder plastisch verformbare Formkörper sind bereits bekannt und bestehen beispielsweise aus Schaumkunststoff, in denen Hohlräume durch Aufschäumen der Kunststoffmasse insbesondere während der Reaktion der Reaktionspartnern derselben gebildet werden. Diese Hohlräume bilden Poren, welche teilweise miteinander in Verbindung stehen oder gegenseitig durch Trennwände getrennt sind, welche aus der Kunststoffmasse bestehen. Zum Aufschäumen werden in der Regel Treibmittel angewendet. Der Nachteil dieser elastisch verformbaren Formkörper besteht vor allem darin, daß verhältnismäßig wenig Freiheitsgrade bestehen, um die Kompressibilität bzw. Volumenverformbarkeit des Formkörpers auf gewünschte Werte bzw. innerhalb verhältnismäßig enger Grenzen einzustellen.

Beispielsweise zum Abdichten von Rissen oder Fugen mit veränderlicher Öffnungsweite bzw. mit unterschiedlicher Fugenbreite oder zur Herstellung federnder Auflager im Bauwesen und im Maschinenbau sowie zur möglichst erschütterungsfreien Verbindung von Befestigungen im Maschinenbau sind derartige Schaumkunststoffe nicht immer gut verwendbar.

Um Feststoffe oder auch Flüssigkeit in größerem Maße volumenkompressibel zu machen, werden Treibgase in die noch bewegliche Masse eingeführt und durch chemische Reaktion wird dafür gesorgt, daß die in Form von kleinen Gasbläschen in der Masse befindlichen volumenkompressiblen Stoffe in der Kunststoffmasse eingebettet bleiben, wenn sich diese durch Reaktion verfestigt hat. Zur Erzeugung eines Schaumkunststoffes in üblicher Weise mit einem zur Einstellung der Volumenkompressibilität erforderlichen Gasvolumen muß auch das auszufüllende Volumen beispielsweise des Risses bekannt sein, da die schaumbildenden Reagenzien in entsprechenden Mengen einzubringen sind. Dies ist bei solchen Rissen, Fugen und dergleichen oder auch beim Ausfüllen von Hohlräumen zwischen zu verbindenden Aggregaten nur schwierig und vielfach gar nicht einigermaßen ausreichend möglich.

Die Aufgabe der Erfindung besteht daher darin, den verformbaren Formkörper dahingehend zu verbessern, daß die insb. Volumenverformbarkeit bei "geschlossenporiger Struktur" mit einfachen Mitteln möglichst genau einstellbar ist.

Die Erfindung besteht darin, daß die Hohlräume nicht unmittelbar innerhalb der Kunststoffmassen gebildet sind und deren Grenzflächen die Kunststoffmasse bilden, sondern daß die Hohlräume sich innerhalb zusätzlicher Hohl- oder Hüllkörper befinden, welche die Hohlräume umhüllend umgeben bzw. Hüllen – vergleichbar mit Seifenblasen – für die Hohlräume bilden und ihrerseits in der Kunststoffmasse eingebettet, insbesondere möglichst fein verteilt bzw. dispergiert sind.

Es empfiehlt sich, wenn die Hohl- oder Hüllkörper aus solchen kleinen Hohlkugeln bestehen, deren Außendurchmesser sich in der Größenordnung zwischen µm und mm befinden. Die Hüllkörper können jedoch auch linsenförmig oder eiförmig bzw. oval ausgebildet sein und sind nicht strikt auf die Kugelform beschränkt.

Die Hüllkörper stellen gewissenmaßen Trennwände zwischen der Kunststoffmasse und den eigentlichen Hohlräumen dar, in welche Luft oder andere Gase eingefüllt sind, die aber auch Vakuum aufweisen können.

Bei der Herstellung des Formkörpers kann dann das Verhältnis zwischen den Hüllkörpern und den von diesen umgebenden Hohlräumen auf der einen Seite und den zur Ausbildung und Ausformung der Kunststoffmasse bestehenden Erzeugnissen auf die gewünschte Volumenkompressibilität genau dosiert abgestimmt werden. Der Formkörper stellt dann zwar auch eine Art Schaum, jedoch mit von den üblichen Schäumen völlig abweichender Struktur dar, bei denen das Material der die Hohlräume unmittelbar umgebenden Hüllkörper zweckmäßigerweise vom Material der Kunststoffmasse abweicht, welche in weiten Bereichen einstellbare mechanische Eigenschaften - je nach gewünschtem Anwendungsfall - steiferer oder weniger steiferer Art aufweist. Mit anderen Worten kann ein "Schaumstoff" mit einstellbarem Gasvolumen erzeugt und in ein vorbestimmtes Volumen bzw. einen vorbestimmten Hohlraum eingebracht werden, ohne daß wesentliche Volumenänderungen - der Reaktionsschwund des für die Herstellung der Kunststoffmasse zweckmäßigerweise verwendeten Reaktionsharzes ist in der Regel vernachlässigbar klein oder kann vorausbestimmt sein - auftreten. Die Erzeugung dieses "Schaumes" erfolgt beispielsweise derart, daß Mikrohohlkugeln aus thermoplastischem Kunststoff in den einen Reaktionspartner des Reaktionsharzes bzw. Kunststoffes oder unmittelbar in das bereits gebildete Reaktionsharzgemisch eingebracht und zweckmäßigerweise gleichmäßig in dem Volumen verteilt werden, ehe die Reaktion abgelaufen ist. Es kann aber auch ein lagenweises Einbringen von Kunststoffmassen unterschiedlicher Ausbildung und unterschiedlicher Materialien einerseits bzw. von Hüllkörpern andererseits erfolgen.

Die Menge der verwendeten Hüllkörper bestimmt das Gasvolumen im fertigen Formkörper und damit dessen Volumenkompressibilität. Die Steifigkeit des insbesonderen ausgehärteten Reaktionsharzes als verwendeter Kunststoffmasse ist abhängig von der Härte des Formkörpers, aber auch von der eingeführten Menge der Hohl- oder Hüllkörper und deren Hohlräume. Durch Wahl eines geeigneten Reaktionsharzes kann eine optimale Haftung auch am jeweiligen Untergrund erreicht werden. Die Ausgangsprodukte für die Kunststoffmasse und die Materialien für die Hüllkörper werden so gewählt, daß keine schädliche Reaktion auftritt, welche zur vorzeitigen Auflösung der Hüllkörper führt, da sonst die Dosierung des Gasvolumens in der Kunststoffmasse vielfach nicht genau erreicht werden kann, da eingeschlossene Hohlräume nach außen diffundieren.

Die Kompressibilität und Steifigkeit des Formkörpers wird zweckmäßigerweise durch die Größe und Verteilung der insbesondere hohlkugelförmigen Hüllkörper eingestellt.

Im folgenden werden Ausführungsbeispiele der Erfindung anhand der Zeichnung näher erläutert. Darin zeigen:

Fig. 1      schematisch einen Querschnitt durch ein unter
            Verwendung eines insb. elastisch verformbaren
            Formkörpers nach der Erfindung auf ein Fundament
            aufgesetztes Maschinenaggregat;

Fig. 2      eine andere Anwendungsart der Erfindung bei der Befestigung eines Ankers in der Bohrung eines Betonelements bzw. im Mauerwerk;

Fig. 3      eine vergrößerte schematische Ausschnittsdarstellung des erfindungsgemäßen Formkörpers und

Fig. 4      eine noch weiter vergrößerte Ausschnittsdarstellung durch den Formkörper sowie

Fig. 5a/b schematisch ein Anwendungsbeispiel.

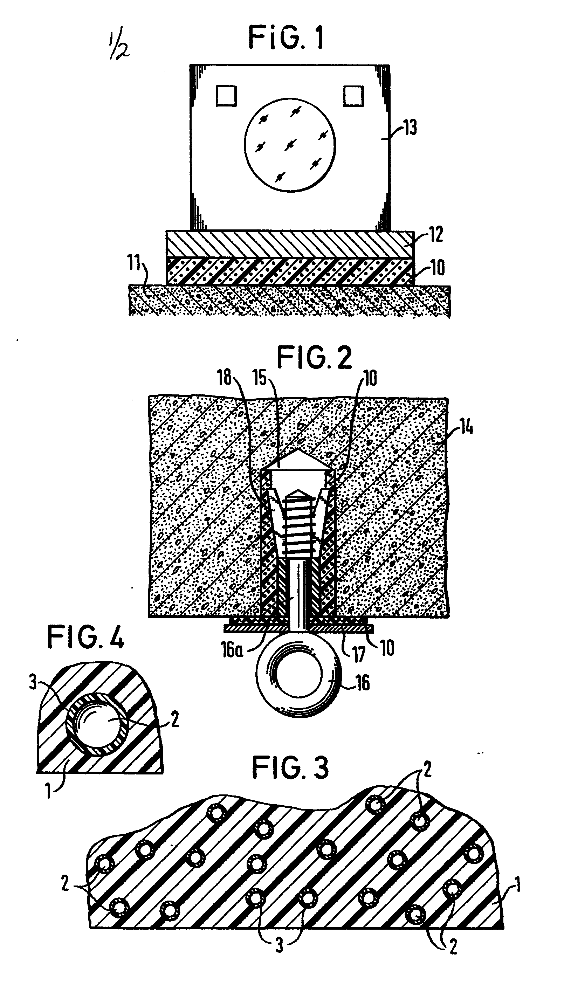

Gemäß Fig. 1 ist ein nach der Erfindung strukturierter Formkörper 10 als stoßdämpfendes Segment ausgebildet und auf ein Fundament 11 aufgelegt. Auf den Formkörper 10 ist eine Stahlplatte 12 aufgesetzt, welche den Druck bzw. die Kraft des Maschinenaggregats 13 gleichmäßig auf die Fläche des Formkörpers 10 verteilt. Das Maschinenaggregat 13 mag beispielsweise eine Waschmaschine sein, welche erheblichen Erschütterungen ausgesetzt ist. Durch Verwendung des erfindungsgemäßen Formkörpers 10 werden diese Erschütterungen praktisch nicht auf das Fundament 11 übertragen. Je nach den Gewichtsverhältnissen und Erschütterungen kann ein dafür geeigneter Formkörper 10 verwendet werden bzw. aus einer Serie von Formkörpern 10 unterschiedlich dosierter Hüllkörper- bzw. Hohlraumanteile ausgewählt werden. Bei dieser Anwendungsart ist der Formkörper 10 bereits vor der Anwendung vorgefertigt und beispielsweise aus einer großen Bahn ausgeschnitten worden.

Bei dem Beispiel der Fig. 2 wird der Formkörper 10 in Form eines Rohres ausgebildet und in die Bohrung 15 in einem Betonbauteil 14, beispielsweise eine Betonwand, eingesetzt. Nach dem Einsetzen des rohrförmigen Formkörpers 10 wird ein Anker 16 mit seinem mit Außengewinde versehenen Ankerschaft 16a und einem Spreizdübel 18 eingesteckt, nachdem vorher ein anderer ringförmiger Formkörper 10 und eine Unterlegscheibe 17 unter den ringförmigen Kopf des Befestigungsankers 16 gesteckt ist. Durch Drehen des Befestigungsankers 16 wird der Spreizdübel 18 gespreizt; er legt sich an die Innenwand des rohrförmigen Formkörpers 10 an, wobei dieser je nach seiner Volumenkompressibilität mehr oder weniger weit an der Stelle des Kraftangriffes komprimiert wird. Der Anker 16 findet dann eine genügende Verankerung innerhalb der Bohrung 15, ohne daß die Spreizdübelteile mit der Betonwand 14 in Berührung kommen, da der Formkörper 10 dies verhindert. Insofern werden Schwingungen von Bauteilen, Maschinenaggregaten oder dergleichen, die am Kopf des Befestigungsankers 16 angreifen, nicht auf die Betonwand 14 übergreifen.

Gemäß Fig. 3 ist gezeigt wie innerhalb der Kunststoffmasse 1 kugelförmige Hohlräume 2 dispergiert sind, die jedoch von der Kunststoffmasse 1 durch das Material der Hohl- oder Hüllkörper 3 getrennt sind. In Fig. 4 ist dies noch deutlicher veranschaulicht.

Beispiel für die Herstellung eines Formkörpers:

Als Hohl- oder Hüllkörper 3 werden etwa 10 Gewichtsprozent (bezogen auf den endgültigen Formkörper) luftgefüllte PVC-Hohlkugeln mit einem Durchmesser zwischen etwa 20 und 60 µm verwendet und mit einer Reaktionskomponente eines Zwei-Komponenten-Epoxidharzes vermischt, ehe die Zugabe der anderen Komponente, beispielsweise des Härters auf z.B. Polyaminbasis zugesetzt wird. Besonders vorteilhaft hat sich die Verwendung eines solchen ZweiKomponenten-Epoxidharzes der Marke IPAPOX IH/E, IPAPOX FM/E oder IPAPOX IH ergeben.

Die Hüllkörper müssen nicht aus thermoplastischem Kunststoff bestehen, sondern können auch aus duroplastischem Kunststoff hergestellt sein.

Die Erfindung betrifft auch eine Vorstufe des eigentlichen Formkörpers, nämlich eine zu dessen Herstellung geeignete Raktionsharzkomponente, die mit den Hohl- bzw. Hüllkörpern in möglichst gleichmäßiger Verteilung versetzt ist. Solche Reaktionsharze sind Kunststoffe, die ähnlich wie Reaktionskleber oder Reaktionslacke, infolge chemischer Reaktion (ausgelöst durch Wärme, Katalysatoren bzw. Härter und/oder eine weitere Komponente) aus dem flüssigen, pulverförmigen oder teigigpastösen Zustand in einen festen Zustand insb. durch Aushärten übergehen. Die Basis für solche Reaktionsharze ist insb. Phenolharze, Epoxidharze, Polyurethane.

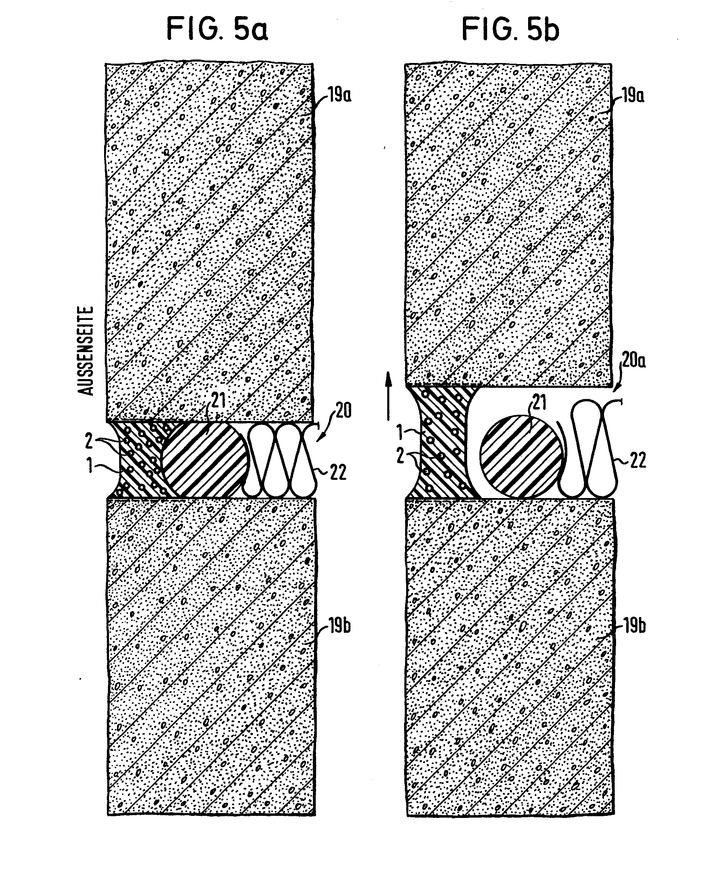

Gemäß Fi. 5a/5b ist die Erfindung auch bei plastisch verformbaren Formkörpern und Fugendichtungsmassen anwendbar: Zu diesem Zweck ist die Fuge 20 zwischen einem Bauteil, z.B. einem Betonblock 19b, und einem anderen Bauteil, z.B. einer Betonwand 19a, an dem zur Außenseite gewandten Teil mit der Kunststoffmasse 1 ausgestopft. Dahinter befindet sich eine formelastische Dichtungsschnur 21 aus z.B. Gummi und daran schließt sich eine Dämpfungsmasse 22 aus z.B. wärmedämmendem Stoff, wie Glas- oder Steinwolle, an. Wird die Fuge 20 gemäß Fig. 5b z.B. durch Wärmedehnungen in Pfeilrichtung breiter, dann ist die erfindungsgemäße Formmasse aufgrund der Hohl- bzw. Hüllkörper 3 in der Lage, der Fugenverbreiterung zu folgen und die Fuge 20a voll abzudichten.

## PATENTANSPRÜCHE
===================================

1. Elastisch oder plastisch verformbarer Formkörper bestehend aus einer Kunststoffmasse (1) mit eingebetteten, insbesondere gasgefüllten Hohlräumen (2), dadurch gekennzeichnet,

   daß die Hohlräume (2) innerhalb geschlossener, in der Kunststoffmasse (1) eingebetteter Hohl- bzw. Hüllkörper (3) gebildet sind.

2. Formkörper nach Anspruch 1, dadurch gekennzeichnet, daß die Mikrohohlkugeln einen Durchmesser zwischen etwa 10 und 75 µm aufweisen.

3. Formkörper nach einem der vorhergehenden Ansprüche, dadurch gekennzeichnet,

   daß die Hüllkörper (3) aus Kunststoffen bestehen, den die Kunststoffmasse im Zustand derer Ausformung nicht wesentlich angreift.

4. Formkörper nach Anspruch 3, dadurch gekennzeichnet, daß die Hüllkörper (3) aus Polyvinyl-Kunststoff oder härtbarem Reaktionsharz auf Epoxidharzbasis bestehen.

5. Formkörper nach einem der vorhergehenden Ansprüche, dadurch gekennzeichnet,

   daß der Gewichtsanteil der Hüllkörper (3) am Gesamtgewicht des Formkörpers (10) zwischen 5 und 25 % oder der Volumenanteil der Hohlräume (2) am Gesamtvolumen des Formkörpers (10) zwischen 5 und 95 Vol% beträgt.

6. Verwendung des Formkörpers nach einem der Ansprüche 1 - 5 als Stoßdämpfer oder Federelement oder zum Ausfüllen von Fugen und/oder Rissen.

7. Verfahren zur Herstellung einer Kunstharzmasse, in die insbesondere gasgefüllte Hohlräume (2) eingebettet sind, bei der die Hohlräume (2) in die Kunststoffmasse (1) eingebracht bzw. dispergiert werden, dadurch gekennzeichnet, daß mindestens ein zur Bildung der Kunststoffmasse (1) dienendes Reaktionsharz mit kugelartigen Hüllkörpern (3), welche die Hohlräume (2) aufweisen bzw. umschließen, gemischt und der Reaktion ausgesetzt wird.

8. Verfahren nach Anspruch 7, dadurch gekennzeichnet, daß die Hüllkörper (3) zuerst mit einem Reaktionspartner gemischt und dieses Gemisch danach mit einem anderen Reaktionspartner versehen wird und daß Reaktionspartner verwendet werden, die kein Lösungsmittel für die Hüllkörper (3) enthalten.

9. Verfahren nach Anspruch 8, dadurch gekennzeichnet, daß Reaktionspartner verwendet werden, die bei Temperaturen unter 100°C miteinander reagieren, und daß für die Hüllkörper (3) thermoplastischer Kunststoff verwendet wird, dessen Erweichungspunkt sich oberhalb 100°C befindet.

10. Zur Herstellung von aushärtbaren Kunststoffen dienende Reaktionsharzkomponente, gekennzeichnet durch einen Anteil (gemessen am ausgehärteten Kunststoff) von zwischen 5 und 25 Gew% Kunststoffhohl- bzw. -hüllkörpern (3), welche einen Außendurchmesser in der Größenordnung zwischen 1 µm und 1 mm aufweisen.

0227897

FiG. 1

FIG. 2

FIG. 4

FIG. 3

# FIG. 5a    # FIG. 5b

Europäisches
Patentamt

**EUROPÄISCHER RECHERCHENBERICHT**

Nummer der Anmeldung

| | EINSCHLÄGIGE DOKUMENTE | | EP 86113555.6 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) | |
| X | US - A - 3 640 787 (HELLER) <br> * Gesamt * <br><br> -- | 1,3,5, 7,9,10 | B 29 C 67/16 <br> B 29 C 67/20 <br> B 29 K105:04 | |
| X <br> A | US - A - 3 608 010 (STAYNER) <br> * Gesamt * <br><br> -- | 1,3,7 <br> 9 | B 29 K105:16 <br> E 04 B 1/68 <br> F 16 M 5/00 | |
| X | US - A - 447 587 (ABEGG) <br> * Gesamt * <br><br> -- | 1,3,7 | F 16 M 7/00 | |
| X <br> A | US - A - 3 632 703 (SULLIVAN) <br> * Gesamt * <br><br> -- | 1,2,7 <br> 5,9,10 | | |
| A | DE - A1 - 2 412 087 (BRAND, ENT-WICKLUNGSGESELLSCHAFT MBH) <br> * Ansprüche 1,2 * <br><br> ---- | 1 | | |
| | | | RECHERCHIERTE SACHGEBIETE (Int Cl 4) | |
| | | | F 16 M 5/00 <br> F 16 M 7/00 <br> E 04 B 1/00 <br> B 29 C 67/00 | |

Der vorliegende Recherchenbericht wurde für alle Patentansprüche erstellt

| Recherchenort | Abschlußdatum der Recherche | Prüfer |
|---|---|---|
| WIEN | 24-03-1987 | PIRKER |